# DEMANDE DE BREVET EUROPEEN

(11) **EP 4 734 605 A1**
(43) Date de publication de la demande: **29.04.2026**
(21) Numéro de dépôt: 25210421.1
(22) Date de dépôt: 22.10.2025
(51) Int. Cl.: H04W 28/16, G06N 3/08, G06N 3/044, G06N 3/045

(54) **PROCÉDÉ D ORDONNANCEMENT DYNAMIQUE DE COMMUNICATIONS ENTRE UNE PLURALITÉ D ÉQUIPEMENTS UTILISATEURS DANS UN RÉSEAU MULTI-UTILISATEURS, ET RÉSEAU MULTI-UTILISATEURS COMPRENANT UN SYSTÈME INFORMATIQUE POUR METTRE EN UVRE UN TEL PROCÉDÉ**

(30) Priorité: 23.10.2024 FR 2411578
(71) Demandeur: THALES, 92190 Meudon (FR); Institut Mines Telecom, 91120 Palaiseau (FR)
(72) Inventeur: NÉRONDAT, Sylvain, 92230 Genevilliers (FR); LETURC, Xavier, 92230 Genevilliers (FR); LE MARTRET, Christophe, 92230 Genevilliers (FR); CIBLAT, Philippe, 91120 Palaiseau (FR)
(74) Mandataire: Lavoix

(57) **Abrégé**

Ce procédé d'ordonnancement dynamique de communications entre une pluralité d'équipements utilisateurs (12) dans un réseau multi-utilisateurs (10), le réseau multi-utilisateurs (10) comprenant en outre un point central (14) muni d'un système informatique (16), comprend les étapes suivantes mises en œuvre par le système informatique (16) :
- réception d'un ensemble de requêtes d'accès à des ressources de communication temporelles et/ou fréquentielles ;
- pour chaque trame de communication courante constituée de n2 ressources de communication temporelles et/ou fréquentielles :
i) constitution d'un état des files d'attente ;
ii) sélection d'un ensemble de n2 files d'attente à servir ;
iii) allocation d'une ressource de communication temporelle et/ou fréquentielle à chaque file d'attente sélectionnée ;
iv) transmission, vers chacun des équipements utilisateurs (12), d'une liste d'allocation des n2 ressources de communication temporelles et/ou fréquentielles pour ladite trame de communication courante.

## Description

La présente invention concerne un procédé d'ordonnancement dynamique de communications entre une pluralité d'équipements utilisateurs dans un réseau multi-utilisateurs. De préférence, le réseau multi-utilisateurs est un réseau sans fil, par exemple un réseau cellulaire de type LTE (de l'acronyme anglais « Long Term Evolution ») ou 5G, ou un réseau ad hoc, sans que cela ne soit limitatif dans le cadre de la présente invention.

La présente invention concerne également un réseau multi-utilisateurs associé, configuré pour mettre en œuvre le procédé d'ordonnancement.

Dans l'état de la technique, il est connu des réseaux multi-utilisateurs comprenant plusieurs équipements utilisateurs et un point central configuré pour centraliser des requêtes d'accès à des ressources de communication temporelles et/ou fréquentielles. De telles requêtes d'accès émanent des équipements utilisateurs, et chacun des équipements utilisateurs et du point central est apte à stocker des données sous la forme de paquets dans des files d'attente. Chaque file d'attente correspond d'une part à un lien entre un des équipements utilisateurs et le point central, et d'autre part à un niveau de qualité de service donné. Les qualités de services peuvent par exemple correspondre à des contraintes de délai ou de taux d'erreur paquets maximales différentes. Les ressources de communication temporelles et/ou fréquentielles peuvent par exemple correspondre à des ressources blocs dans des réseaux cellulaires conformes à la norme de communication 4G/5G, ou bien à des créneaux temporels dans un système d'accès multiple par répartition temporelle TDMA (de l'acronyme anglais « Time Division Multiple Access ») des différents équipements utilisateurs.

Le point central peut être une station de base dans un réseau cellulaire, ou encore un équipement utilisateur dans le contexte de réseaux ad hoc. Dans le cas de liaisons montantes (« uplink » en anglais) ou de liaisons latérales (« sidelink » en anglais), les équipements utilisateurs émettent des requêtes auprès du point central lorsqu'ils ont des données à transmettre. Pour cela, ils lui transmettent des informations relatives à ces données (qualité de service, quantité de données à transmettre, temps d'attente maximal de ces données, etc.). Ces données sont alors stockées au niveau des équipements utilisateurs sous la forme de paquets dans les files d'attentes précédemment évoquées. Dans le cas de liaisons descendantes (« downlink » en anglais), le point central dispose déjà de la connaissance des paquets à transmettre à certains des équipements utilisateurs, et les données sont stockées au niveau du point central sous la forme de paquets dans les files d'attentes précédemment évoquées. Un problème qui se pose est alors de réaliser l'ordonnancement dynamique des communications entre les équipements utilisateurs dans le réseau multi-utilisateurs, en fonction de l'état des files d'attentes et ce en maximisant les performances au sein du réseau. Ce problème est connu dans l'état de l'art sous la terminologie d'« ordonnancement », ou « scheduling » en anglais. L'ordonnancement des communications s'effectuent sur des trames de communication, chaque trame de communication étant constitué d'un nombre prédéterminé de ressources de communication temporelles et/ou fréquentielles, autrement dit d'un nombre prédéterminé de ressources blocs ou de créneaux temporels.

Dans les implémentations pratiques, les files d'attentes sont de taille finie, et les paquets arrivants dans une file d'attente pleine sont supprimés. Cet évènement est appelé dépassement de mémoire tampon, ou « buffer overflow » en anglais. Les paquets peuvent avoir une durée de vie limitée qui est caractérisée par une durée de vie maximale dont la terminologie consacrée en anglais dans les standards est « packet delay budget » (PDB). Les paquets dans les files d'attente ayant atteint leur durée de vie maximale sont supprimés. Cet évènement est appelé violation de délai ou « delay violation » en anglais.

Chaque file d'attente correspondant à un lien et à un niveau de qualité de service donné contient un ensemble d'informations caractérisant les paquets pour ce lien et cette qualité de service, par exemple la durée de vie restante de chaque paquet, le nombre de paquets, la qualité du canal pour ce lien, etc.

Afin de répondre au problème d'ordonnancement précité, des solutions connues consistent en des procédés d'ordonnancement mettant en œuvre des heuristiques. De tels procédés réalisent le plus souvent l'allocation des ressources de communication temporelles et/ou fréquentielles créneau temporel par créneau temporel, sans optimiser l'allocation sur un cycle complet. D'autres solutions consistent en des procédés d'ordonnancement mettant en œuvre un ou plusieurs réseau(x) de neurones profond(s) entrainé(s) par un apprentissage par renforcement. Ces procédés considèrent le plus souvent un nombre de liens connus à l'avance (afin que le nombre d'entrées du réseau de neurones soit fixe), ou bien utilisent des solutions de contournement (par exemple une présélection d'un nombre fixe de liens via une heuristique) afin de garder un nombre fixe de liens. À ce titre, le document brevet CN 113395723 B décrit par exemple un tel procédé d'ordonnancement mettant en œuvre un apprentissage par renforcement. Le procédé comporte une étape consistant à modifier des tables d'indicateur de qualité. Le procédé comporte d'autres étapes consistant à effectuer un choix de files d'attente, à modifier ce choix de files d'attente, à effectuer un choix de schéma de modulation et de codage, à modifier ce choix de schéma de modulation et de codage, puis à effectuer la mise en trames de communication, le tout séquentiellement. Toutefois, un inconvénient du procédé d'ordonnancement décrit dans ce document brevet est qu'il aboutit à un ordonnancement et à une allocation des ressources relativement imprécis. D'autres architectures utilisent des réseaux de neurones de type LSTM (de l'acronyme anglais « Long Short-Term Memory ») qui permettent de gérer un nombre d'utilisateurs pouvant varier. Cependant, ces architectures de type LSTM sont dépendantes de l'ordre dans lequel les équipements utilisateurs sont présentés en entrée du réseau de neurones, ce qui n'est pas souhaitable car non optimal et donc peu performant. En outre, de telles architectures ne permettent pas d'allouer des ressources de communication temporelles et/ou fréquentielles autres que des ressources blocs.

Enfin, dans le document "Flexible Reinforcement Learning Scheduler for 5G Networks", ICMLCN 2024 - International conference on machine learning for communication and networking, Stockholm, Sweden, 5-8 May 2024, il est décrit un procédé d'ordonnancement mettant en œuvre un réseau de neurones unique ainsi qu'une heuristique. Le procédé d'ordonnancement comprend une étape de traitement des différentes files d'attente en parallèle afin d'obtenir un critère individuel pour chaque file d'attente. Le réseau de neurones fournit la proportion de ressources blocs à allouer à chaque file d'attente, et ainsi l'utilisation d'une heuristique est nécessaire afin d'allouer un nombre entier de ressources blocs (et non une fraction de ressources blocs). Cependant, un inconvénient d'un tel procédé d'ordonnancement est qu'il ne prend pas en compte de l'état des autres files d'attente, et qu'il requiert l'utilisation d'une heuristique et ne permet donc pas d'optimiser l'allocation des ressources de communication temporelles et/ou fréquentielles sur un cycle complet.

La présente invention a pour but de proposer un procédé d'ordonnancement dynamique de communications entre une pluralité d'équipements utilisateurs dans un réseau multi-utilisateurs, mettant en œuvre un réseau de neurones profond entrainé par un apprentissage par renforcement et permettant de réaliser l'ordonnancement des communications en fonction de l'état des files d'attente et de maximiser les performances au sein du réseau, notamment en termes de précision d'allocation des ressources de communication temporelles et/ou fréquentielles. La présente invention a également pour but de proposer un tel procédé qui permette d'allouer toutes sortes de ressources de communication temporelles et/ou fréquentielles, notamment autres que des ressources blocs, tout en étant indépendant de l'ordre dans lequel les états des files d'attentes des équipements utilisateurs sont présentés en entrée du réseau de neurones. La présente invention a également pour but de proposer un tel procédé qui permette d'effectuer du codage et de la modulation adaptative AMC (de l'acronyme anglais « Adaptative Modulation and Coding »).

À cet effet, l'invention a pour objet un procédé d'ordonnancement dynamique de communications entre une pluralité d'équipements utilisateurs dans un réseau multi-utilisateurs, le réseau multi-utilisateurs comprenant, outre ladite pluralité d'équipements utilisateurs, un point central configuré pour centraliser des requêtes d'accès à des ressources de communication temporelles et/ou fréquentielles, lesdites requêtes d'accès émanant des équipements utilisateurs, chacun des équipements utilisateurs et du point central étant apte à stocker des données sous la forme de paquets dans des files d'attente, chaque file d'attente correspondant d'une part à un lien entre un des équipements utilisateurs et un autre équipement utilisateur ou le point central, et d'autre part à un niveau de qualité de service donné, le réseau multi-utilisateurs présentant un nombre n1 de niveaux de qualité de service distincts, le point central étant muni d'un système informatique comprenant au moins un premier réseau de neurones profond configuré comme un encodeur, et au moins un deuxième réseau de neurones profond agencé en sortie dudit au moins un premier réseau de neurones, lesdits réseaux de neurones étant entrainés par un apprentissage par renforcement, ledit au moins un premier réseau de neurones recevant comme entrées l'ensemble des états des différents liens à un instant courant et présentant une propriété d'équivariance par permutation sur ses entrées reçues, et étant configuré pour fournir en sortie l'état de chaque lien associé à son contexte avec les autres liens audit instant courant, ledit au moins un premier réseau de neurones étant configuré de manière à recevoir un nombre variable d'entrées et à disposer à chaque instant de la connaissance de l'ensemble des paquets de données dans l'ensemble des files d'attente, ledit au moins un deuxième réseau de neurones présentant n1 sorties et étant entraîné de manière à optimiser un critère donné relatif aux communications entre la pluralité d'équipements utilisateurs ; le procédé comprenant les étapes suivantes mises en œuvre par le système informatique :
- réception d'un ensemble de requêtes d'accès à des ressources de communication temporelles et/ou fréquentielles, lesdites requêtes comprenant des informations relatives aux types de trafic à véhiculer entre les équipements utilisateurs ;
- pour chaque trame de communication courante constituée de n2 ressources de communication temporelles et/ou fréquentielles :
   i) constitution, à partir de l'ensemble des paquets de données dans l'ensemble des files d'attente, d'un état des files d'attente, en fonction desdites informations reçues relatives aux types de trafic à véhiculer entre les équipements utilisateurs ;
   ii) sélection, à partir dudit état des files d'attente constitué, d'un ensemble de n2 files d'attente à servir ;
   iii) allocation d'une ressource de communication temporelle et/ou fréquentielle à chaque file d'attente sélectionnée ;
   iv) transmission, vers chacun des équipements utilisateurs, d'une liste d'allocation des n2 ressources de communication temporelles et/ou fréquentielles pour ladite trame de communication courante.

On entend par « encodeur » un réseau de neurones configuré pour encoder un ensemble de données d'entrée en un autre ensemble de caractéristiques relatives à ces données d'entrée et considérées comme essentielles. Le rôle de l'encodeur est de donner une certaine représentation des données de telle sorte à ce que cette représentation soit adaptée pour un objectif prédéfini.

Grâce au fait que le premier réseau de neurones présente une propriété d'équivariance par permutation sur ses entrées reçues, le procédé d'ordonnancement selon la présente invention est plus performant que les procédés d'ordonnancement de l'art antérieur. En effet, en choisissant la file d'attente à servir pour chacune des ressources de communication temporelles et/ou fréquentielles de la trame de communication courante de façon distincte mais non indépendante, la dimensionnalité de l'espace d'états variables est avantageusement réduite. Le procédé prend ainsi en compte la trame de communication sous-jacente lors du choix de l'allocation de ressources ce qui réduit sensiblement la complexité combinatoire, contrairement aux procédés d'ordonnancement de l'art antérieur. Le procédé d'ordonnancement selon l'invention est en outre indépendant de l'ordre dans lequel les équipements utilisateurs sont présentés en entrée du premier réseau de neurones, permet de traiter des espaces d'actions combinatoires (autrement dit des espaces d'actions de dimension exponentiellement grande), permet d'allouer toutes sortes de ressources de communication temporelles et/ou fréquentielles, notamment autres que des ressources blocs, ainsi que d'effectuer du codage et de la modulation adaptative AMC. Du fait de la configuration particulière des premier et deuxième réseaux de neurones, le procédé selon l'invention présente en outre de meilleures performances d'inférence et une vitesse de convergence augmentée durant la phase d'apprentissage des réseaux de neurones. Le procédé d'ordonnancement selon l'invention permet également de gérer facilement l'allocation de ressources de communication supplémentaires (telles que par exemple le schéma de modulation et de codage ou la puissance), à chaque ressource bloc ou créneau temporel de la trame de communication courante. Par ailleurs, dans le procédé selon l'invention, l'allocation des ressources de communication temporelle et/ou fréquentielle est effectuée directement, à chaque file d'attente sélectionnée. Ceci permet d'améliorer notablement la précision de l'allocation des ressources par rapport aux procédés d'ordonnancement de l'art antérieur, en particulier par rapport aux procédés mettant en œuvre un ou plusieurs réseau(x) de neurones profond entrainé(s) par un apprentissage par renforcement. Enfin, l'apprentissage du premier et du deuxième réseau de neurones peut être réalisé hors ligne, ce qui permet au procédé d'ordonnancement selon l'invention de pouvoir s'adapter rapidement à tout type de configuration pour le réseau multi-utilisateurs.

Suivant d'autres aspects avantageux de l'invention, le procédé comprend une ou plusieurs des caractéristiques suivantes, prise(s) isolément ou suivant toutes les combinaisons techniquement possibles :
- les ressources de communication temporelles et/ou fréquentielles comportent des schémas de modulation et de codage et/ou des niveaux de puissance d'émission, chaque trame de communication courante est constituée de n2 créneaux temporels et, lors de l'étape allocation d'une ressource de communication temporelle et/ou fréquentielle à chaque file d'attente sélectionnée, il est alloué à chaque file d'attente sélectionnée, pour un desdits créneaux temporels, un schéma de modulation et de codage donné et/ou un niveau de puissance d'émission donné ;
- ledit au moins un premier réseau de neurones est muni d'un mécanisme d'attention permettant de représenter l'état de chaque lien associé à son contexte avec les autres liens audit instant courant ;
- ledit au moins un premier réseau de neurones est un réseau de neurones de type transformeur sans codage positionnel ;
- pour chaque trame de communication courante constituée de n2 ressources de communication temporelles et/ou fréquentielles, l'étape de sélection des n2 files d'attente à servir comprend en outre une étape d'application, par le système informatique, d'un masque vectoriel binaire aux n1 sorties dudit au moins un deuxième réseau de neurones, ledit masque vectoriel binaire étant choisi de telle sorte qu'une probabilité nulle est attribuée à une sortie dudit au moins un deuxième réseau de neurones lorsque ladite sortie correspond à une action invalide prédéterminée ;
- pour chaque trame de communication courante constituée de n2 ressources de communication temporelles et/ou fréquentielles, l'étape de sélection des n2 files d'attente à servir comprend en outre une étape de mise à jour, par le système informatique, du masque vectoriel binaire dans ladite trame de communication courante en fonction des allocations de ressources de communication temporelle et/ou fréquentielle effectuées pour un sous-ensemble des n2 files d'attente à servir ;
- la sélection, pour une trame de communication courante donnée, des n2 files d'attente à servir est effectuée soit en parallèle soit séquentiellement ;
- le système informatique comprend un seul premier réseau de neurones profond configuré comme un encodeur, et n2 deuxièmes réseaux de neurones profond, les premier et deuxièmes réseaux de neurones étant entrainés par un apprentissage par renforcement, et la sélection, pour une trame de communication courante donnée, des n2 files d'attente à servir est effectuée en parallèle ;
- le système informatique comprend un seul premier réseau de neurones profond configuré comme un encodeur, et un seul deuxième réseau de neurones profond, les premier et deuxième réseaux de neurones étant entrainés par un apprentissage par renforcement, et la sélection, pour une trame de communication courante donnée, des n2 files d'attente à servir est effectuée séquentiellement et par application n2 fois dudit deuxième réseau de neurones profond ;
- le système informatique comprend n2 paires de premiers réseaux de neurones profonds configurés comme des encodeurs et de deuxièmes réseaux de neurones profond, chaque paire étant constituée d'un premier réseau de neurones profond et d'un deuxième réseau de neurones profond, les n2 paires de premiers et deuxièmes réseaux de neurones profonds étant reliées en série, les premiers et deuxièmes réseaux de neurones étant entrainés par un apprentissage par renforcement, et la sélection, pour une trame de communication courante donnée, des n2 files d'attente à servir est effectuée séquentiellement.

L'invention a également pour objet un réseau multi-utilisateurs comprenant une pluralité d'équipements utilisateurs et un point central configuré pour centraliser des requêtes d'accès à des ressources de communication temporelles et/ou fréquentielles, chacun des équipements utilisateurs et du point central étant apte à stocker des données sous la forme de paquets dans des files d'attente, chaque file d'attente correspondant d'une part à un lien entre un des équipements utilisateurs et un autre équipement utilisateur ou le point central, et d'autre part à un niveau de qualité de service donné, le réseau multi-utilisateurs présentant un nombre n1 de niveaux de qualité de service distincts, le point central étant muni d'un système informatique comprenant au moins un premier réseau de neurones profond configuré comme un encodeur, et au moins un deuxième réseau de neurones profond, agencé en sortie dudit au moins un premier réseau de neurones, lesdits réseaux de neurones étant entrainés par un apprentissage par renforcement, ledit au moins un premier réseau de neurones recevant comme entrées l'ensemble des états des différents liens à un instant courant et présentant une propriété d'équivariance par permutation sur ses entrées reçues, et étant configuré pour fournir en sortie l'état de chaque lien associé à son contexte avec les autres liens audit instant courant, ledit au moins un premier réseau de neurones étant configuré de manière à recevoir un nombre variable d'entrées et à disposer à chaque instant de la connaissance de l'ensemble des paquets de données dans l'ensemble des files d'attente, ledit au moins un deuxième réseau de neurones présentant n1 sorties et étant entraîné de manière à optimiser un critère donné relatif aux communications entre la pluralité d'équipements utilisateurs, dans lequel le système informatique est configuré pour mettre en œuvre les étapes du procédé tel que précédemment décrit.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un réseau multi-utilisateurs selon un exemple de réalisation de l'invention, le réseau multi-utilisateurs comprenant plusieurs équipements utilisateurs et un point central muni d'un système informatique ;
- la figure 2 est une vue schématique du système informatique de la figure 1 selon un premier mode de réalisation de l'invention ;
- la figure 3 est une vue schématique du système informatique de la figure 1 selon un deuxième mode de réalisation de l'invention ;
- la figure 4 est une vue schématique du système informatique de la figure 1 selon un troisième mode de réalisation de l'invention ; et
- la figure 5 est un organigramme d'un procédé d'ordonnancement dynamique de communications entre une pluralité d'équipements utilisateurs, mis en œuvre par le système informatique de la figure 1.

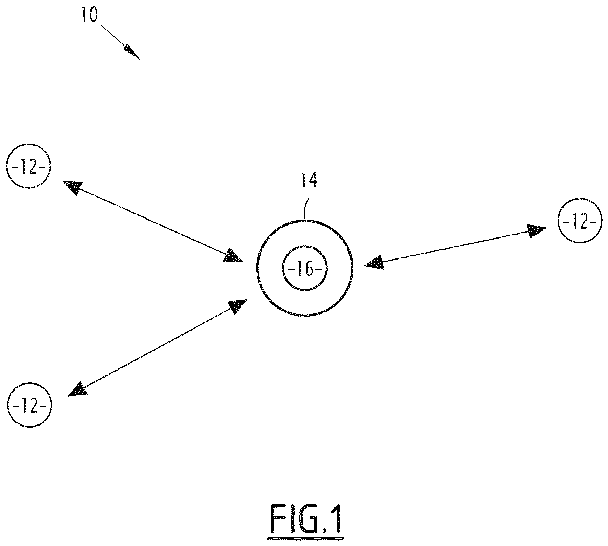

Un réseau multi-utilisateurs 10 selon un exemple de réalisation de l'invention est illustré schématiquement sur la figure 1. Le réseau multi-utilisateurs 10 est typiquement un réseau sans fil, par exemple un réseau cellulaire de type **LTE** (de l'acronyme anglais « Long Term Evolution ») ou 5G, ou un réseau ad hoc, sans que cela ne soit limitatif dans le cadre de la présente invention.

Le réseau multi-utilisateurs 10 comprend plusieurs équipements utilisateurs 12, par exemple trois équipements utilisateurs 12 dans l'exemple de réalisation particulier illustré sur la figure 1. Le réseau multi-utilisateurs 10 comprend également un point central 14 configuré pour centraliser des requêtes d'accès à des ressources de communication temporelles et/ou fréquentielles, lesquelles requêtes émanent des équipements utilisateurs 12. Les ressources de communication temporelles et/ou fréquentielles peuvent par exemple correspondre à des ressources blocs dans des réseaux cellulaires conformes à la norme de communication 4G/5G, ou bien à des créneaux temporels dans un système d'accès multiple par répartition temporelle TDMA (de l'acronyme anglais « Time Division Multiple Access ») des différents équipements utilisateurs. En variante, les ressources de communication temporelles et/ou fréquentielles peuvent correspondre à des schémas de modulation et de codage MCS (de l'acronyme anglais « Modulation and Coding Scheme »), ou encore à des puissances d'émission.

Chacun des équipements utilisateurs 12 et du point central 14 est apte à stocker des données sous la forme de paquets dans des files d'attente, chaque file d'attente correspondant d'une part à un lien entre un des équipements utilisateurs 12 et un autre équipement utilisateur 12 ou le point central 14, et d'autre part à un niveau de qualité de service donné. Chaque file d'attente correspondant à un lien et à un niveau de qualité de service donné contient un ensemble d'informations caractérisant les paquets pour ce lien et cette qualité de service, par exemple la durée de vie restante de chaque paquet, le nombre de paquets, la qualité du canal pour ce lien, etc.

Le réseau multi-utilisateurs 10 présente un nombre n1 de niveaux de qualité de service distincts. Les qualités de services peuvent par exemple correspondre à des contraintes de délai ou de taux d'erreur paquets maximales différentes. Dans le cas de liaisons montantes (« uplink » en anglais) ou de liaisons latérales (« sidelink » en anglais), les équipements utilisateurs 12 émettent des requêtes auprès du point central 14 lorsqu'ils ont des données à transmettre. Pour cela, ils lui transmettent des informations relatives à ces données (qualité de service, quantité de données à transmettre, temps d'attente de ces données, etc.). Ces données sont alors stockées au niveau des équipements utilisateurs 12 sous la forme de paquets dans les files d'attentes précédemment évoquées. Dans le cas de liaisons descendantes (« downlink » en anglais), le point central 14 dispose déjà de la connaissance des paquets à transmettre à certains des équipements utilisateurs 12, et les données sont stockées au niveau du point central 14 sous la forme de paquets dans les files d'attentes précédemment évoquées.

Le point central 14 est muni d'un système informatique 16. Le système informatique 16 comprend au moins un premier réseau de neurones profond 18 configuré comme un encodeur, et au moins un deuxième réseau de neurones profond 20 agencé en sortie du premier réseau de neurones 18, les premier et deuxième réseaux de neurones 18, 20 étant entrainés par un apprentissage par renforcement. On entend par « apprentissage par renforcement de réseaux de neurones profonds » un sous-domaine de l'apprentissage automatique (« machine learning » en anglais) qui consiste à réaliser un apprentissage par renforcement à une architecture de réseaux de neurones profonds (« deep reinforcement learning » en anglais). L'apprentissage par renforcement permet de s'approcher d'une politique optimale dans le cadre de processus de décision Markovien qui modélise le problème d'ordonnancement.

Le ou chaque premier réseau de neurones 18 reçoit comme entrées l'ensemble des états des différents liens à un instant courant et présente une propriété d'équivariance par permutation sur ses entrées reçues. On entend par « propriété d'équivariance par permutation » le fait que, pour toute permutation sur les entrées du premier réseau de neurones 18, le résultat de sortie de ce réseau de neurones 18 subit la même permutation. Le ou chaque premier réseau de neurones 18 est configuré pour fournir en sortie l'état de chaque lien associé à son contexte avec les autres liens à cet instant courant. On entend par « contexte » d'un lien donné (donc d'une file d'attente donnée) à un instant donné, l'ensemble des autres liens (donc des autres files d'attente) corrélés audit lien à cet instant. Une telle corrélation peut par exemple être effectuée grâce à un mécanisme d'attention. Le ou chaque premier réseau de neurones 18 est configuré de manière à recevoir un nombre variable d'entrées et à disposer à chaque instant de la connaissance de l'ensemble des paquets de données dans l'ensemble des files d'attente. De préférence, le ou chaque premier réseau de neurones 18 est muni d'un mécanisme d'attention permettant de représenter l'état de chaque lien associé à son contexte avec les autres liens à un instant donné. Par « mécanisme d'attention » on entend tout mécanisme permettant à un modèle de regarder directement et d'extraire l'état de n'importe quel lexème dans une séquence donnée d'un réseau de neurones. De préférence encore, et de manière non limitative dans le cadre de la présente invention, le ou chaque premier réseau de neurones 18 est un réseau de neurones transformeur de type encodeur uniquement (aussi appelé « Encoder Only Transformer » en anglais), sans codage positionnel. Par « réseau de neurones de type transformeur sans codage positionnel » on entend tout réseau de neurones élaboré selon un modèle auto-attentif qui peut prendre un nombre arbitraire de liens, possède la propriété d'équivariance par permutation et est muni d'un mécanisme d'attention.

Le ou chaque deuxième réseau de neurones 20 présente n1 sorties et est entraîné de manière à optimiser un critère donné relatif aux communications entre les équipements utilisateurs 12. Le critère relatif aux communications entre les équipements utilisateurs 12 consiste par exemple à minimiser le nombre total de paquets de données perdus, sans que cela ne soit limitatif dans le cadre de la présente invention. En variante, le critère relatif aux communications entre les équipements utilisateurs 12 peut par exemple consister à maximiser le débit des communications au sein du réseau multi-utilisateurs 10.

Chacun des premier et deuxième réseaux de neurones 18, 20 est un réseau de neurones profond entrainé par un apprentissage par renforcement qui comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Dans le deuxième réseau de neurones 20, chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

Une couche de neurones entièrement connectée est une couche dans laquelle les neurones de ladite couche sont chacun connectés à tous les neurones de la couche précédente.

Un tel type de couche présente dans le deuxième réseau de neurones 20 est plus souvent dénommé selon le terme anglais de « fully connected », et parfois désigné sous la dénomination « couche dense ».

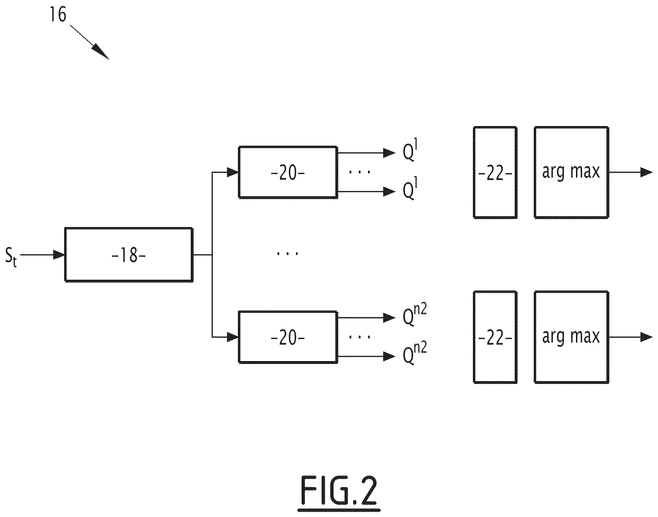

Dans le premier mode de réalisation de l'invention illustré sur la figure 2, correspondant au mode de réalisation préférentiel de l'invention, le système informatique 16 comprend un seul premier réseau de neurones profond 18, et n2 deuxièmes réseaux de neurones profonds 20, les réseaux de neurones 18, 20 étant entrainés par un apprentissage par renforcement. Chacun des n2 deuxièmes réseaux de neurones 20 est connecté sur une branche parallèle en sortie du premier réseau de neurones 18, l'architecture du système informatique 16 présenté sur la figure 2 étant qualifiée d'architecture par « ramifications d'actions » (« action branching » en anglais).

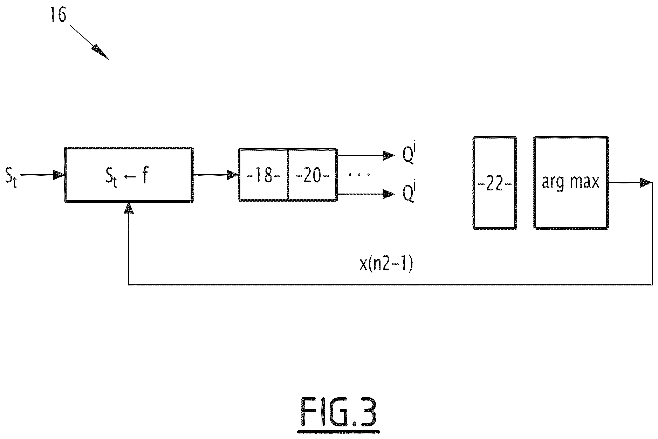

Dans le deuxième mode de réalisation de l'invention illustré sur la figure 3, le système informatique 16 comprend un seul premier réseau de neurones profond 18, et un seul deuxième réseau de neurones profond 20, les deux réseaux de neurones 18, 20 étant entrainés par un apprentissage par renforcement. L'approche envisagée dans ce deuxième mode de réalisation consiste à appliquer n2 fois les premier et deuxième réseaux de neurones 18, 20 pour sélectionner les n2 files d'attente, l'architecture du système informatique 16 présenté sur la figure 3 étant qualifiée d'architecture « récursive ».

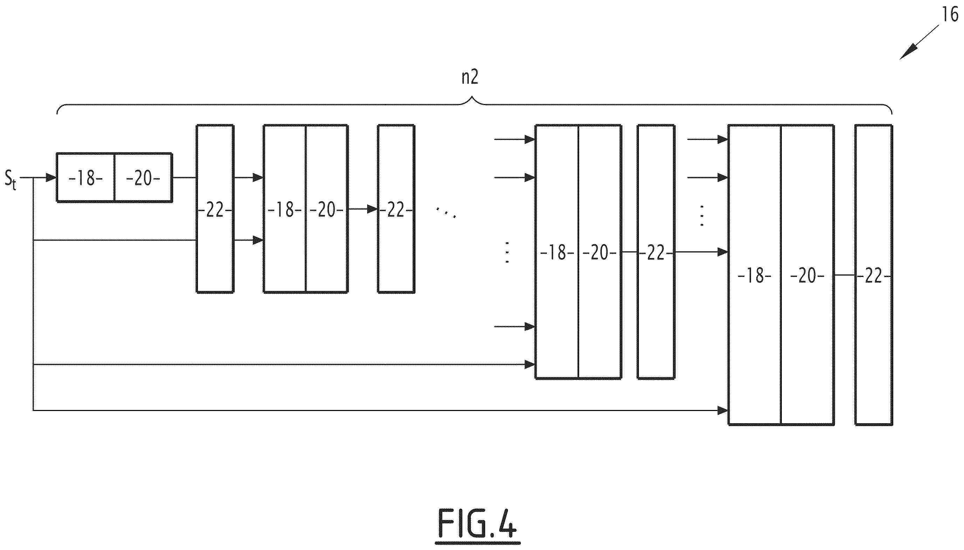

Dans le troisième mode de réalisation de l'invention illustré sur la figure 4, le système informatique 16 comprend n2 premiers réseaux de neurones profonds 18, et n2 deuxièmes réseaux de neurones profond 20, les réseaux de neurones 18, 20 étant entrainés par un apprentissage par renforcement. Les n2 premiers réseaux de neurones profonds 18 et deuxièmes réseaux de neurones profonds 20 sont regroupés par ensembles, chaque ensemble étant constitué d'une paire faite d'un premier réseaux de neurones 18 et d'un deuxième réseau de neurones 20. Les n2 ensembles sont reliés en série. L'entrée de chaque ensemble constitué d'un premier réseau de neurones 18 et d'un deuxième réseau de neurones 20 correspond à l'état courant sₜ et aux actions choisies par les réseaux de neurones 18, 20 précédents, l'architecture du système informatique 16 présenté sur la figure 4 étant qualifiée d'architecture « autorégressive ». A l'instar des autres architectures illustrées sur les figures 2 et 3, chaque ensemble constitué d'un premier réseau de neurones 18 et d'un deuxième réseau de neurones 20 fournit une représentation latente des états des différents liens entre les équipements utilisateurs 12 et le point central 14.

Dans chacun des premier, deuxième et troisième modes de réalisation présentés ci-dessus, le point central 14 dispose de la connaissance de l'ensemble des paquets dans l'ensemble des files d'attente dont il constitue un état sₜ qu'il utilise pour déterminer les files d'attentes à servir, comme cela sera détaillé par la suite. L'état sₜ peut par exemple correspondre à l'ensemble des durées de vie des paquets présents dans les files d'attentes. On considère que l'état *sₜ =* [*S*_{1,*t*},*S*_{2*,t*},...,*S*_{*ℓ*,*t*}] est l'ensemble des états des différents liens où *S_{k,t}* est l'état du lien k. L'ensemble des états possibles est appelé « espace d'états ». L'ensemble des actions possibles pouvant être mises en œuvre par le point central 14 est quant à lui appelé « espace d'actions », chaque action correspondant à une sélection particulière, par le point central 14, de certaines files d'attente. En outre, dans chacun de ces trois modes de réalisation, le système informatique 16 est configuré pour appliquer un masque vectoriel binaire 22 aux n1 sorties du ou de chaque deuxième réseau de neurones 20. Le masque vectoriel binaire 22 est choisi de telle sorte qu'une probabilité nulle est attribuée à une sortie du ou de chaque deuxième réseau de neurones 20 lorsque cette sortie correspond à une action invalide prédéterminée. Ceci permet d'éviter l'adoption d'une action invalide, autrement dit de sélectionner une file d'attente vide.

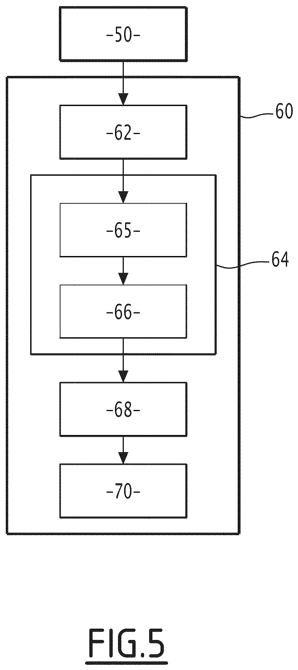

Le procédé d'ordonnancement dynamique des communications entre les équipements utilisateurs 12 dans le réseau multi-utilisateurs 10, mis en œuvre par le système informatique 16, sera désormais expliqué en référence à la figure 5 présentant un organigramme de ses étapes. On suppose pour la suite que le réseau multi-utilisateurs 10 comporte I1 liens entre d'une part un équipement utilisateur 12 et d'autre part un autre équipement utilisateur 12 ou le point central 14, et n1 de niveaux de qualité de service distincts.

Au préalable, dans le cas d'une communication montante ou latérale (aussi appelée communication « uplink » ou « sidelink » en langue anglaise), les équipements utilisateurs 12 envoient au point central 14 des requêtes d'accès à des ressources de communication temporelles et/ou fréquentielles. Ces requêtes d'accès comprennent des informations relatives aux types de trafic à véhiculer entre les équipements utilisateurs 12 (par exemple le nombre de bits à écouler, une contrainte de niveau de qualité de service associé à ces trafics, etc.). Les données contenues dans les requêtes d'accès sont alors stockées sous la forme de paquets dans des files d'attente associées aux liens entre les équipements utilisateurs 12 et le point central 14.

Les principaux challenges techniques posés par le problème d'ordonnancement dynamique des communications selon l'invention sont les suivants :
- le nombre d'équipements utilisateurs 12 présents dans le réseau multi-utilisateurs 10 peut varier au cours du temps (par exemple dans un réseau cellulaire, un équipement utilisateur 12 peut quitter une cellule), par conséquent, la dimension de l'espace d'états et de l'espace d'actions peut également varier au cours du temps ;
- la dimension de l'espace d'actions augmente exponentiellement avec la taille du cycle d'allocation n2, conduisant à des espaces d'actions de très grande dimension.

Par ailleurs, si des ressources de communication temporelles et/ou fréquentielles autres que des ressources blocs ou des créneaux temporels peuvent être allouées (par exemple si des ressources de type schémas de modulation et de codage MCS ou puissances d'émission peuvent être allouées), alors la dimension de l'espace d'actions est encore plus grande.

Lors d'une étape initiale 50, le système informatique 16 reçoit les requêtes d'accès à des ressources de communication temporelles et/ou fréquentielles, émises par les équipements utilisateurs 12.

Le procédé comporte ensuite une phase 60 exécutée pour chaque trame de communication courante constituée de n2 ressources de communication temporelles et/ou fréquentielles.

Lors d'une première étape 62 de cette phase 60, le système informatique 16 commence par constituer, à partir de l'ensemble des paquets de données dans l'ensemble des files d'attente, l'état des files d'attente sₜ. Cette constitution de l'état sₜ est effectuée en fonction des informations reçues relatives aux types de trafic à véhiculer entre les équipements utilisateurs 12, figurant dans les requêtes d'accès émanant des équipements utilisateurs 12.

Au cours d'une étape suivante 64 de la phase 60, le système informatique 16 sélectionne un ensemble de n2 files d'attente à servir, à partir de l'état sₜ des files d'attente constitué (il y a en effet une file d'attente à servir pour chaque ressource de communication temporelle et/ou fréquentielle de la trame de communication courante). Cette étape 64 de sélection des n2 files d'attente à servir est effectuée soit en parallèle soit séquentiellement. Dans le premier mode de réalisation de l'invention représenté sur la figure 2, la sélection des n2 files d'attente à servir est effectuée en parallèle. Dans le deuxième mode de réalisation de l'invention représenté sur la figure 3, la sélection des n2 files d'attente à servir est effectuée séquentiellement et par application n2 fois du deuxième réseau de neurones profond 20. Dans le troisième mode de réalisation de l'invention représenté sur la figure 4, la sélection des n2 files d'attente à servir est effectuée séquentiellement.

De préférence, l'étape 64 de sélection des n2 files d'attente à servir comprend une sous-étape 65 d'application, par le système informatique 16, du masque vectoriel binaire 22 aux n1 sorties du ou de chaque deuxième réseau de neurones 20. Pour ce faire, l'étape 64 de sélection des n2 files d'attente à servir comprend également une sous-étape intermédiaire de vectorisation des n1 sorties du ou de chaque deuxième réseau de neurones 20. De préférence encore, l'étape 64 de sélection des n2 files d'attente à servir comprend en outre une sous-étape suivante 66 de mise à jour, par le système informatique 16, du masque vectoriel binaire 22 dans la trame de communication courante en fonction des allocations de ressources de communication temporelle et/ou fréquentielle effectuées pour un sous-ensemble des n2 files d'attente à servir. Cette sous-étape 66 de mise à jour du masque vectoriel binaire 22 permet d'éviter qu'une action valide initialement (ou au cours de trames de communication précédentes) ne devienne invalide durant une trame de communication courante.

Au cours d'une étape suivante 68 de la phase 60, le système informatique 16 alloue une des ressources de communication temporelles et/ou fréquentielles à chaque file d'attente sélectionnée. Selon un mode de réalisation particulier de l'invention dans lequel les ressources de communication temporelles et/ou fréquentielles comportent des schémas de modulation et de codage MCS et/ou des niveaux de puissance d'émission, et dans lequel chaque trame de communication courante est constituée de n2 créneaux temporels, le système informatique 16, lors de cette étape 68, alloue à chaque file d'attente sélectionnée, pour un des créneaux temporels, un schéma de modulation et de codage donné et/ou un niveau de puissance d'émission donné.

Au cours d'une étape suivante 70 de la phase 60 (toujours dans le cadre d'une communication montante ou latérale), le système informatique 16 transmet, vers chacun des équipements utilisateurs 12, une liste d'allocation des n2 ressources de communication temporelles et/ou fréquentielles pour la trame de communication courante. À l'issue de cette étape 68, des paquets de données figurant dans les n2 files d'attente sélectionnées sont extraits de ces files d'attente, mis en trame puis transmis par les équipements utilisateurs 12. Le nombre de paquets extraits des files d'attentes sélectionnés dépend du choix du schéma de modulation et de codage. Il est à noter que le système informatique 16 du point central 14 peut décider de servir plusieurs fois la même file d'attente durant une même trame de communication.

On remarque que, dans le procédé d'ordonnancement dynamique de communications selon la présente invention, l'idée générale commune aux trois architectures (qui correspondent aux trois modes de réalisation illustrés sur les figures 2 à 4) est de choisir la file d'attente à servir pour chacune des ressources de communication temporelles et/ou fréquentielles de la trame de communication courante de façon distincte mais non indépendante, dans le but de réduire la dimensionnalité de l'espace d'actions. En d'autres termes, au lieu de considérer le choix des n2 files d'attente à servir dans la trame de communication courante comme une unique action (ce qui conduirait par exemple à un espace d'actions de dimension (l₁n₁)ⁿ²), le procédé selon l'invention permet de choisir chacune des n2 files d'attente à servir soit en parallèle, soit séquentiellement, ce qui conduit à effectuer n2 choix d'actions de dimension (l₁n₁), réduisant ainsi drastiquement la complexité. Contrairement aux procédés d'ordonnancement de l'art antérieur qui mettent en œuvre des heuristiques et/ou effectuent le choix des n2 actions de manière indépendante, et dans lesquels l'allocation de ressources est effectuée sans prendre en compte la trame de communication sous-jacente, le procédé d'ordonnancement selon la présente invention permet avantageusement d'effectuer le choix des actions de manière non indépendante et de prendre ainsi en compte la trame de communication sous-jacente lors du choix de l'allocation des ressources.

Dans le premier mode de réalisation de l'invention représenté sur la figure 2, correspondant au mode de réalisation préférentiel de l'invention, l'idée est de séparer le choix de l'action à choisir pour chaque ressource de communication temporelle et/ou fréquentielle de la trame de communication courante, et de laisser un certain degré d'indépendance dans le choix des actions sur les différentes branches du système informatique 16 afin de réduire la dimension de l'espace d'action sur chaque branche. Il y a n2 branches, chacune correspondant à une ressource de communication temporelle et/ou fréquentielle. Il y a donc (l₁n₁) actions pour chaque branche. La sortie de chaque branche correspond à la Q-value de chaque action, c'est-à-dire la Q-value pour chaque choix de file d'attente, pour la ressource de communication temporelle et/ou fréquentielle en question. La Q-value d'une action donnée correspond à la valeur moyenne de la somme des récompenses pondérées à long terme en choisissant cette action. Cette récompense peut dépendre de la perte de paquets, du débit, de l'équité, du délai moyen, du nombre moyen de paquets restants dans les files d'attente. Une représentation du système est donnée par le premier réseau de neurones 18, puis cette représentation passe dans chacune des n2 branches, donc dans chacun des n2 deuxièmes réseaux de neurones 20. L'estimation de la fonction de valeur, commune à toutes les branches, est calculée en parallèle de la fonction avantage, car elle ne dépend que de l'état du système. La fonction avantage, elle, est propre à chacune des branches puisqu'elle dépend du choix de l'action. C'est ce qu'on appelle en langue anglaise le « dueling ». Le dueling a pour but d'améliorer l'apprentissage du réseau, tant sur la vitesse de convergence que sur la robustesse. Le masque vectoriel binaire 22 sur la première branche correspond aux actions invalides pour le choix de la première ressource de communication temporelle et/ou fréquentielle de la trame de communication courante, et dépend uniquement de l'état des files d'attentes. Le masque vectoriel binaire 22 sur la i-ème branche correspond quant à lui aux actions invalides pour le choix relatif à la i-ème ressource de communication temporelle et/ou fréquentielle, et dépend à la fois de l'état des files d'attentes et des choix réalisés pour les (i-1) premières ressources de communication temporelles et/ou fréquentielles. Pour une branche donnée, le masque vectoriel binaire 22 de cette branche est mis à jour au cours de la sous-étape 66 au moment de la prise d'action avant de choisir l'action de la branche suivante. Dans le premier mode de réalisation de l'invention, il n'y a qu'une seule passe dans le premier réseau de neurones 18, ce qui permet d'obtenir des résultats sur chacune des n2 branches en parallèle, et réduit ainsi avantageusement le temps d'inférence.

Dans le deuxième mode de réalisation de l'invention représenté sur la figure 3, il y a (l₁n₁) Q-values en sortie du deuxième réseau de neurones 20 à chaque application de ce deuxième réseau de neurones 20. Le masque vectoriel binaire 22 est appliqué au cours de la sous-étape 65, puis l'action qui maximise la Q-value parmi les files d'attente disponibles est sélectionnée. Le masque vectoriel binaire 22 et l'état sₜ sont mis à jour au cours de la sous-étape 66, à chaque prise d'action. Les états ainsi mis à jour passent dans les mêmes premier et deuxième réseaux de neurones 18, 20. L'état des files d'attente est mis à jour à l'aide d'une fonction prédéterminée. Pour la première ressource de communication temporelle et/ou fréquentielle, la fonction prédéterminée correspond à l'identité, donc il n'y a pas de modification de l'état courant sₜ. Pour les ressources de communication temporelles et/ou fréquentielles suivantes, cette fonction prédéterminée consiste à mettre à jour la file d'attente sélectionnée : les paquets de données les plus anciens de cette file d'attente sont extraits, en accord avec le schéma de modulation et de codage MCS choisi. On utilise l'état ainsi modifié pour choisir une nouvelle file d'attente. Cette architecture du deuxième mode de réalisation de l'invention est la seule parmi celles proposées qui peut être utilisée pour un nombre variable de ressources de communication temporelles et/ou fréquentielles, en plus d'un nombre variable de liens. Cette architecture requiert également moins de paramètres à entraîner que pour les autres architectures des premier et troisième modes de réalisation.

Dans le troisième mode de réalisation de l'invention représenté sur la figure 4, à l'instar des premier et deuxième modes de réalisation, chacun des premiers réseaux de neurones 18 fournit une représentation latente des états des différents liens, qui sont utilisés par le deuxième réseau de neurones 20 avec n1 neurones de sorties pour donner finalement (l₁n₁) Q-values en sortie, éliminant ainsi l'explosion exponentielle de la dimension de l'espace d'action. Les n2 premiers réseaux de neurones 18 décident séquentiellement les actions. Le i-ème premier réseau de neurones 18 prend en entrée l'état sₜ et les (i-1) premières actions, et fournit en sortie la i-ème action. Ce troisième mode de réalisation de l'invention permet de prendre les actions séquentiellement et potentiellement de mieux prendre en compte les interactions entre l'état et les actions prises précédemment. Comme pour les premier et deuxième modes de réalisation, chaque masque vectoriel binaire 22 est mis à jour au cours de la sous-étape 66 après chaque choix d'action.

On conçoit alors que le procédé d'ordonnancement dynamique de communications selon l'invention présente un certain nombre d'avantages.

Il permet en effet de traiter des dimensions d'espace d'états variable et permet au premier réseau de neurones de prendre en compte l'entièreté des files d'attente. Le procédé prend en compte la trame de communication sous-jacente lors du choix de l'allocation de ressources ce qui réduit sensiblement la complexité combinatoire, contrairement aux procédés d'ordonnancement de l'art antérieur. Le procédé d'ordonnancement selon l'invention est en outre indépendant de l'ordre dans lequel les équipements utilisateurs sont présentés en entrée du premier réseau de neurones, permet de traiter des espaces d'actions combinatoires (autrement dit des espaces d'actions de dimension exponentiellement grande), permet d'allouer toutes sortes de ressources de communication temporelles et/ou fréquentielles, notamment autres que des ressources blocs, ainsi que d'effectuer du codage et de la modulation adaptative AMC. Du fait de la configuration particulière des premier et deuxième réseaux de neurones, le procédé selon l'invention présente en outre de meilleures performances d'inférence et une vitesse de convergence augmentée durant la phase d'apprentissage des réseaux de neurones. Le procédé d'ordonnancement selon l'invention permet également de gérer facilement l'allocation de ressources de communication supplémentaires à chaque ressource bloc ou créneau temporel de la trame de communication courante. Par ailleurs, dans le procédé selon l'invention, l'allocation des ressources de communication temporelle et/ou fréquentielle est effectuée directement, à chaque file d'attente sélectionnée. Ceci permet d'améliorer notablement la finesse et la précision de l'allocation des ressources par rapport aux procédés d'ordonnancement de l'art antérieur, en particulier par rapport aux procédés mettant en œuvre un ou plusieurs réseau(x) de neurones profonds entrainés par un apprentissage par renforcement. Enfin, l'apprentissage du premier et du deuxième réseau de neurones peut être réalisé hors ligne, ce qui permet au procédé d'ordonnancement selon l'invention de pouvoir s'adapter rapidement à tout type de configuration pour le réseau multi-utilisateurs.

## Revendications

1. Procédé d'ordonnancement dynamique de communications entre une pluralité d'équipements utilisateurs (12) dans un réseau multi-utilisateurs (10), le réseau multi-utilisateurs (10) comprenant, outre ladite pluralité d'équipements utilisateurs (12), un point central (14) configuré pour centraliser des requêtes d'accès à des ressources de communication temporelles et/ou fréquentielles, lesdites requêtes d'accès émanant des équipements utilisateurs (12), chacun des équipements utilisateurs (12) et du point central (14) étant apte à stocker des données sous la forme de paquets dans des files d'attente, chaque file d'attente correspondant d'une part à un lien entre un des équipements utilisateurs (12) et un autre équipement utilisateur (12) ou le point central (14), et d'autre part à un niveau de qualité de service donné, le réseau multi-utilisateurs (10) présentant un nombre n1 de niveaux de qualité de service distincts, le point central (14) étant muni d'un système informatique (16) comprenant au moins un premier réseau de neurones profond (18) configuré comme un encodeur, et au moins un deuxième réseau de neurones profond (20) agencé en sortie dudit au moins un premier réseau de neurones (18), lesdits réseaux de neurones étant entrainés par un apprentissage par renforcement, ledit au moins un premier réseau de neurones (18) recevant comme entrées l'ensemble des états des différents liens à un instant courant et présentant une propriété d'équivariance par permutation sur ses entrées reçues, et étant configuré pour fournir en sortie l'état de chaque lien associé à son contexte avec les autres liens audit instant courant, ledit au moins un premier réseau de neurones (18) étant configuré de manière à recevoir un nombre variable d'entrées et à disposer à chaque instant de la connaissance de l'ensemble des paquets de données dans l'ensemble des files d'attente, ledit au moins un deuxième réseau de neurones (20) présentant n1 sorties et étant entraîné de manière à optimiser un critère donné relatif aux communications entre la pluralité d'équipements utilisateurs (12) ;
le procédé comprenant les étapes suivantes mises en œuvre par le système informatique (16) :
- réception (50) d'un ensemble de requêtes d'accès à des ressources de communication temporelles et/ou fréquentielles, lesdites requêtes comprenant des informations relatives aux types de trafic à véhiculer entre les équipements utilisateurs (12) ;
- pour chaque trame de communication courante constituée de n2 ressources de communication temporelles et/ou fréquentielles :
i) constitution (62), à partir de l'ensemble des paquets de données dans l'ensemble des files d'attente, d'un état des files d'attente, en fonction desdites informations reçues relatives aux types de trafic à véhiculer entre les équipements utilisateurs (12) ;
ii) sélection (64), à partir dudit état des files d'attente constitué, d'un ensemble de n2 files d'attente à servir ;
iii) allocation (68) d'une ressource de communication temporelle et/ou fréquentielle à chaque file d'attente sélectionnée ;
iv) transmission (70), vers chacun des équipements utilisateurs (12), d'une liste d'allocation des n2 ressources de communication temporelles et/ou fréquentielles pour ladite trame de communication courante.

2. Procédé d'ordonnancement dynamique de communications selon la revendication 1, dans lequel les ressources de communication temporelles et/ou fréquentielles comportent des schémas de modulation et de codage et/ou des niveaux de puissance d'émission, dans lequel chaque trame de communication courante est constituée de n2 créneaux temporels et dans lequel, lors de l'étape allocation (68) d'une ressource de communication temporelle et/ou fréquentielle à chaque file d'attente sélectionnée, il est alloué à chaque file d'attente sélectionnée, pour un desdits créneaux temporels, un schéma de modulation et de codage donné et/ou un niveau de puissance d'émission donné.

3. Procédé d'ordonnancement dynamique de communications selon la revendication 1 ou 2, dans lequel ledit au moins un premier réseau de neurones (18) est muni d'un mécanisme d'attention permettant de représenter l'état de chaque lien associé à son contexte avec les autres liens audit instant courant.

4. Procédé d'ordonnancement dynamique de communications selon la revendication 3, dans lequel ledit au moins un premier réseau de neurones (18) est un réseau de neurones de type transformeur sans codage positionnel.

5. Procédé d'ordonnancement dynamique de communications selon l'une quelconque des revendications précédentes, dans lequel, pour chaque trame de communication courante constituée de n2 ressources de communication temporelles et/ou fréquentielles, l'étape (64) de sélection des n2 files d'attente à servir comprend en outre une étape d'application (65), par le système informatique (16), d'un masque vectoriel binaire (22) aux n1 sorties dudit au moins un deuxième réseau de neurones (20), ledit masque vectoriel binaire (22) étant choisi de telle sorte qu'une probabilité nulle est attribuée à une sortie dudit au moins un deuxième réseau de neurones (20) lorsque ladite sortie correspond à une action invalide prédéterminée.

6. Procédé d'ordonnancement dynamique de communications selon la revendication 5, dans lequel, pour chaque trame de communication courante constituée de n2 ressources de communication temporelles et/ou fréquentielles, l'étape (64) de sélection des n2 files d'attente à servir comprend en outre une étape de mise à jour (66), par le système informatique (16), du masque vectoriel binaire (22) dans ladite trame de communication courante en fonction des allocations de ressources de communication temporelle et/ou fréquentielle effectuées pour un sous-ensemble des n2 files d'attente à servir.

7. Procédé d'ordonnancement dynamique de communications selon l'une quelconque des revendications précédentes, dans lequel la sélection (64), pour une trame de communication courante donnée, des n2 files d'attente à servir est effectuée soit en parallèle soit séquentiellement.

8. Procédé d'ordonnancement dynamique de communications selon la revendication 7, dans lequel le système informatique (16) comprend un seul premier réseau de neurones profond (18) configuré comme un encodeur, et n2 deuxièmes réseaux de neurones profonds (20), les premier et deuxièmes réseaux de neurones étant entrainés par un apprentissage par renforcement, et dans lequel la sélection (64), pour une trame de communication courante donnée, des n2 files d'attente à servir est effectuée en parallèle.

9. Procédé d'ordonnancement dynamique de communications selon la revendication 7, dans lequel le système informatique (16) comprend un seul premier réseau de neurones profond (18) configuré comme un encodeur, et un seul deuxième réseau de neurones profond (20), les premier et deuxième réseaux de neurones étant entrainés par un apprentissage par renforcement et dans lequel la sélection (64), pour une trame de communication courante donnée, des n2 files d'attente à servir est effectuée séquentiellement et par application n2 fois dudit deuxième réseau de neurones profond (20).

10. Procédé d'ordonnancement dynamique de communications selon la revendication 7, dans lequel le système informatique (16) comprend n2 paires de premiers réseaux de neurones profonds (18) configurés comme des encodeurs et de deuxièmes réseaux de neurones profond (20), chaque paire étant constituée d'un premier réseau de neurones profond (18) et d'un deuxième réseau de neurones profond (20), les n2 paires de premiers et deuxièmes réseaux de neurones profonds (18, 20) étant reliées en série, les premiers et deuxièmes réseaux de neurones étant entrainés par un apprentissage par renforcement et dans lequel la sélection (64), pour une trame de communication courante donnée, des n2 files d'attente à servir est effectuée séquentiellement.

11. Réseau multi-utilisateurs (10) comprenant une pluralité d'équipements utilisateurs (12) et un point central (14) configuré pour centraliser des requêtes d'accès à des ressources de communication temporelles et/ou fréquentielles, chacun des équipements utilisateurs (12) et du point central (14) étant apte à stocker des données sous la forme de paquets dans des files d'attente, chaque file d'attente correspondant d'une part à un lien entre un des équipements utilisateurs (12) et un autre équipement utilisateur (12) ou le point central (14), et d'autre part à un niveau de qualité de service donné, le réseau multi-utilisateurs (10) présentant un nombre n1 de niveaux de qualité de service distincts, le point central (14) étant muni d'un système informatique (16) comprenant au moins un premier réseau de neurones profond (18) configuré comme un encodeur, et au moins un deuxième réseau de neurones profond (20) agencé en sortie dudit au moins un premier réseau de neurones (18), lesdits réseaux de neurones étant entrainés par un apprentissage par renforcement, ledit au moins un premier réseau de neurones (18) recevant comme entrées l'ensemble des états des différents liens à un instant courant et présentant une propriété d'équivariance par permutation sur ses entrées reçues, et étant configuré pour fournir en sortie l'état de chaque lien associé à son contexte avec les autres liens audit instant courant, ledit au moins un premier réseau de neurones (18) étant configuré de manière à recevoir un nombre variable d'entrées et à disposer à chaque instant de la connaissance de l'ensemble des paquets de données dans l'ensemble des files d'attente, ledit au moins un deuxième réseau de neurones (20) présentant n1 sorties et étant entraîné de manière à optimiser un critère donné relatif aux communications entre la pluralité d'équipements utilisateurs (12), dans lequel le système informatique (16) est configuré pour mettre en œuvre les étapes du procédé selon l'une quelconque des revendications 1 à 10.
